# EUROPÄISCHE PATENTANMELDUNG

(11) **EP 4 763 725 A1**
(43) Veröffentlichungstag der Anmeldung: **24.06.2026**
(21) Anmeldenummer: 25219442.8
(22) Anmeldetag: 28.11.2025
(51) Int. Cl.: B65B 59/00, B65G 21/10, B65G 21/20

(54) **FÖRDERVORRICHTUNG MIT ÜBER EINE GEMEINSAME EINSTELLVORRICHTUNG EINSTELLBAREN LINKS- UND RECHTSSEITIGEN TRAGELEMENTEN**

(30) Priorität: 13.12.2024 DE 202024107237 U
(71) Anmelder: WIPOTEC GmbH, 67657 Kaiserslautern (DE)
(72) Erfinder: Walter, Markus Jochen, 67705 Trippstadt (DE)
(74) Vertreter: Eder Schieschke & Partner mbB

(57) **Zusammenfassung**

Die Erfindung betrifft eine Einstellvorrichtung für eine Fördervorrichtung mit einer Transportstrecke zum Fördern von Objekten in einer Förderrichtung (x), wobei die Einstellvorrichtung seitlich der Transportstrecke wenigstens zwei einander gegenüberliegende links- und rechtsseitige Tragelemente (1a, 1b) aufweist, die Tragelemente (1a, 1b) über die gemeinsame Einstellvorrichtung jeweils in oder entgegen einer Richtung (y) quer zur Förderrichtung (x) verstellbar sind, die Einstellvorrichtung ein Einstellelement und eine Kupplungseinheit (3) aufweist, die ein voneinander unabhängiges Trennen und Verbinden sowohl der linksseitigen als auch der rechtsseitigen Tragelemente (1a, 1b) von dem Einstellelement ermöglicht.

## Beschreibung

Die Erfindung betrifft eine Fördervorrichtung mit den Merkmalen des Oberbegriffs des Anspruchs 1. Derartige Fördervorrichtungen weisen seitlich der Förderstrecke Tragelemente auf, um Mittel zur Bearbeitung, zur Inspektion oder zur Positionierung, insbesondere Mittel zur Führung, wie Seitenpressbänder oder Führungselemente von zu transportierenden Produkten anzuordnen oder zu haltern.

Diese Tragelemente müssen jedoch exakt eingestellt werden, um deren Funktion (Positionierung, Bearbeitung, Inspektion der Produkte) ordnungsgemäß erfüllen zu können.

Muss eine Änderung der aktuellen Einstellung - beispielsweise aufgrund eines Chargen- bzw. Produktwechsels - erfolgen, so erfordert dies eine erneute exakte und damit zeitaufwändige Einstellung der jeweiligen Position (Abstand zueinander, Mittenposition, Abstände zum Produkt, etc.). Hierzu weisen am Markt befindliche Fördervorrichtungen üblicherweise unabhängige Einstellvorrichtungen für rechts- und linksseitige Tragelemente auf, mittels welcher diese quer zur Transportrichtung positioniert werden können.

Der vorliegenden Erfindung liegt daher die Aufgabe zugrunde, eine Fördervorrichtung zu schaffen, die auf schnelle und einfache Weise eine exakte Einstellung und Änderung gewünschter Parameter bzw. Abstände ermöglicht.

Diese Aufgabe wird erfindungsgemäß durch eine Fördervorrichtung mit den Merkmalen des Anspruchs 1 gelöst.

Zur schnelleren und exakten Änderung der Einstellung weist die Fördervorrichtung links- und rechtsseitige Tragelemente auf, die über eine gemeinsame Einstellvorrichtung quer zur Förderrichtung, vorzugsweise in entgegengesetzter Richtung zueinander, verstellbar sind. Die Tragelemente und damit die ortsfest darauf oder daran angeordneten Mittel können insbesondere aufeinander zu oder voneinander weg bewegt werden also zur Förderstrecke hin und von dieser weg bewegt werden. Die Bewegung erfolgt vorzugsweise in oder parallel zur Ebene der Förderstrecke.

Zudem weist die Einstellvorrichtung eine Kupplungseinheit auf, die ein voneinander unabhängiges Trennen sowohl der linksseitigen als auch der rechtsseitigen Tragelemente von und Verbinden mit einem Einstellelement ermöglicht.

Hierbei kann ein Tragelement mit dem Einstellelement verbunden werden, während das andere Tragelement von dem Einstellelement getrennt ist. Hierdurch kann das verbundene Tragelement in seiner Position verstellt werden (durch entsprechendes Betätigen des Einstellelements) während das getrennte Tragelement in seiner Position verbleibt. Sind beide Tragelemente mit der Kupplungseinheit bzw. über die Kupplungseinheit mit dem Einstellelement verbunden, so kann ein gemeinsames Verstellen oder Einstellen der Position der Tragelemente erfolgen. Ist die Verbindung des Einstellelements zu beiden Tragelementen getrennt, so können die Tragelemente und/oder die Kupplungseinheit (manuell oder durch entsprechendes Betätigen des Einstellelements) in ihrer/seiner Position verstellt werden.

Insbesondere kann auch die Mittenposition bei einem zueinander symmetrischen Einstellen der Tragelemente (aufeinander zubewegen oder voneinander wegbewegen) verändert und in gewünschter Weise auf neue Gegebenheiten angepasst werden.

Durch das Vorsehen der Kupplungseinheit kann so vorteilhafterweise auf jegliche erforderliche Änderung der Produktgröße, Produktart und Lage sowie gewünschter Abstand der Mittel (Abstand zueinander, Mittenposition, Abstände zum Produkt, etc.) auf schnelle und einfache Weise reagiert werden und wiederum exakte Positionen eingestellt werden.

Selbst bei besonders häufig wechselnden Produkten, wie sie beispielsweise bei Lohnfertigern durch ihre Linien gefahren werden, kann durch die Erfindung eine schnelle Umrüstung bzw. Einstellen neuer Parameter und Positionen vorgenommen werden.

Selbstverständlich kann die erfindungsgemäße Kupplungseinheit aus einem einzigen Element oder auch aus mehreren Kupplungselementen bestehen.

In bevorzugter Ausgestaltung der Erfindung weist die Kupplungseinheit für das Lösen und Verbinden der links und rechtsseitigen Tragelemente mit dem Einstellelement getrennt in Eingriff und außer Eingriff bringbare Kraftübertragungselemente auf.

Diese Kraftübertragungselemente können beispielsweise als Zahnräder, Reibräder, oder auch Riemenantrieb ausgebildet sein.

In weiterer Ausgestaltung der Erfindung ist das Einstellelement drehbar und/oder verschiebbar ausgebildet. Hierdurch können die Tragelemente durch Betätigung des Einstellelements abhängig von einem Kupplungszustand vorteilhafterweise einzeln oder gemeinsam zentrisch aufeinander zu oder voneinander weg oder gemeinsam äquidistant verstellt oder verschoben werden. Die Tragelemente sind mittels der Kupplungseinheit mit dem Einstellelement zu dem jeweiligen Kupplungszustand einzeln lösbar verbindbar.

In besonders bevorzugter Ausgestaltung der Erfindung weist die Kupplungseinheit mindestens zwei Klemmbereiche auf. Hierdurch können die Tragelemente vorteilhafterweise unabhängig voneinander mit der Kupplungseinheit, insbesondere über die Kupplungseinheit mit der Einstellelement, lösbar verbunden werden.

In weiterer Ausgestaltung der Erfindung ist die Kupplungseinheit derart ausgebildet, dass sie relativ zum Einstellelement verschoben oder verdreht werden kann. Hierdurch erhöht sich vorteilhafterweise die Einstellbarkeit der Fördervorrichtung zusätzlich.

Beispielsweise weist die Kupplungseinheit hierzu mindestens 3 Klemmbereiche (vorzugsweise zwei äußere und einen mittleren) auf, wobei nun ein Klemmbereich, vorzugsweise der mittlere, dazu dient die Kupplungseinheit mit dem Einstellelement lösbar zu verbinden. Vorzugsweise weisen die mindestens 3 Klemmbereiche jeweils einen eigenen axialen Klemmschlitz, bevorzugt in einer Linie, und eigene Klemmmittel auf.

In bevorzugter Ausgestaltung sind die mindestens drei Klemmbereiche in axialer Richtung durch mindestens zwei radiale Schlitzungen getrennt. Zudem kann die Kupplungseinheit eine Markierung aufweisen, die bevorzugt umlaufend und/oder als Nut ausgebildet ist, um eine optische Justage (gegenüber einem (orts-)festen Element der Fördervorrichtung, insbesondere einer Skala, welche die aktuelle Position anzeigt) zu erleichtern.

In weiterer Ausgestaltung der Erfindung ist das Einstellelement als drehbare Welle oder als Linearantrieb ausgebildet. Die Tragelemente können vorzugsweise drehbare Gewindehülsen oder Gewindestangen aufweisen, wobei die Gewindehülsen oder Gewindestangen durch die Kupplungseinheit mit der drehbaren Welle einzeln lösbar verbunden sind. Hierdurch können durch Drehung der drehbaren Welle im verbundenen Zustand die Tragelemente auf einfache Weise einzeln oder gemeinsam verschoben werden. Die Kupplungseinheit kann dabei vorzugsweise selbst mit der drehbaren Welle verbindbar und lösbar ausgebildet sein.

Auf den Trageelementen können als Mittel zur Be- oder Verarbeitung oder auch zur Inspektion von zu fördernden Produkten (Seiten-)Führungen angeordnet sein, die direkt als Seitenführung (Gleitflächen, etc.) dienen oder an denen Seitenpressbänder angeordnet werden können.

In besonders bevorzugter Ausgestaltung der Erfindung sind die Tragelemente unabhängig voneinander an einem Gestell bzw. Rahmen der Vorrichtung festsetzbar ausgebildet. Hierdurch erhöht sich die Einstellbarkeit und Exaktheit der Fördervorrichtung weiter, da ein Tragelement durch Festsetzen exakt an seiner Position verbleibt. So ist eine unabsichtliche Veränderung der Position verhindert. Zudem kann durch ein Festsetzen eines Tragelements und ein entsprechendes zwischenzeitliches Lösen der Verbindung zur Kupplungseinheit eine Positionsänderung der beiden Tragelemente zueinander vorgenommen werden. Nach einem erneuten Verbinden mit der Kupplungseinheit kann danach wieder ein gemeinsames Verstellen der Tragelemente erfolgen.

In weiterer Ausgestaltung der Erfindung sind die Tragelemente und/oder Elemente der Tragelemente und/oder Elemente der (Seiten-)Führungen in einer Höhenrichtung verschiebbar ausgebildet. Hierdurch kann eine weitere Anpassung der Tragelemente und damit auch der ortsfest darauf oder daran angeordneten Mittel an gewünschte Positionen vorgenommen werden.

Weitere vorteilhafte Ausgestaltungen sind in den Unteransprüchen angegeben.

Die Erfindung wird nachfolgend anhand in der Zeichnung dargestellter Ausführungsbeispiele näher erläutert.

In der Zeichnung zeigen:
- Fig. 1: eine perspektivische Ansicht einer ersten Ausführungsform einer Einstellvorrichtung für eine Fördervorrichtung nach der Erfindung;
- Fig. 2: eine schematische Draufsicht auf die Einstellvorrichtung nach Fig. 1;
- Fig. 3: eine perspektivische Ansicht einer zweiten Ausführungsform einer Einstellvorrichtung für eine Fördervorrichtung nach der Erfindung;
- Fig. 4: eine perspektivische Ansicht einer Kupplungseinheit einer Einstellvorrichtung nach Fig. 1 oder Fig. 3 als Einzelheit;
- Fig. 5: eine Längsschnittansicht der Kupplungseinheit nach Fig. 4;
- Fig. 6: eine schematische perspektivische Längsschnittansicht einer Kupplungseinheit mit Welle und Hülsen und
- Fig. 7: eine Draufsicht auf eine Kupplungseinheit nach Fig. 6.

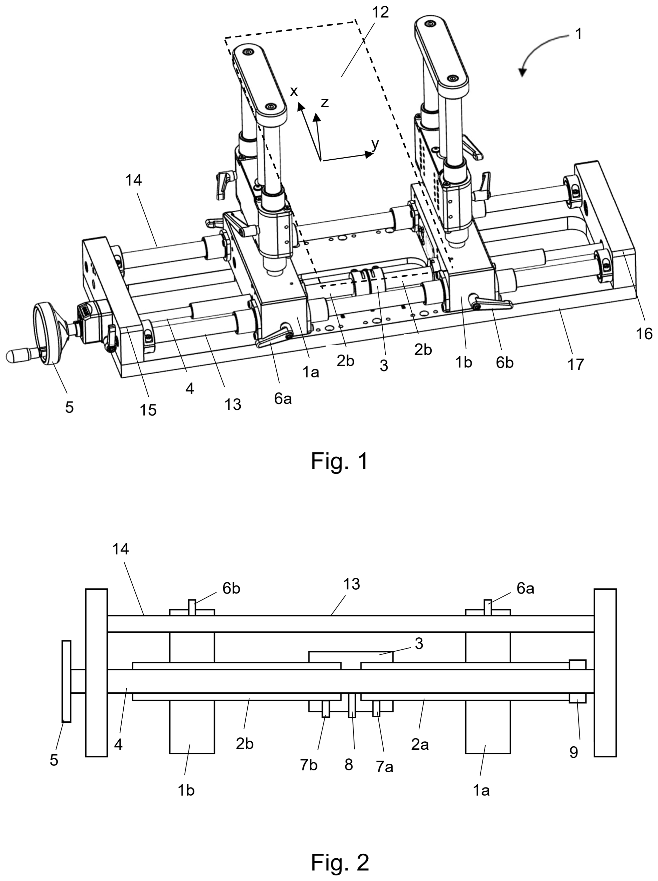

Wie aus Fig. 1 ersichtlich, weist die dargestellte Einstellvorrichtung 1 seitlich einer schematisch dargestellten in x-y Richtung liegenden Förderebene 12 (beispielsweise ein Förderband), Tragelemente 1a und 1b auf.

Das linksseitige Tragelement 1a und das rechtsseitige Tragelement 1b liegen in Richtung y-Achse quer zur Förderrichtung x vorzugsweise einander direkt gegenüber.

Auf den Trageelementen 1a und 1b sind als Mittel in der Zeichnung nicht dargestellte Seitenführungen angeordnet, die direkt als Seitenführung (Gleitflächen) dienen oder an denen Seitenpressbänder angeordnet werden können.

Selbstverständlich ist es auch denkbar an den Tragelementen 1a und 1b beliebige Mittel anzuordnen, die zur Be- oder Verarbeitung oder auch Inspektion von zu fördernden Produkten dienen.

Um diese Mittel exakt in ihrer Position zueinander als auch in Position bzw. Abstand zu Außenflächen von Produkten einstellen zu können, weist die Einstellvorrichtung 1 ein Einstellelement in Form einer drehbar gelagerten Welle 4 auf, das beispielsweise über ein Handrad 5 betätigt werden kann.

Die Welle 4 ist hierzu in einer linken Platte 16 und einer rechten Platte 16 in entsprechenden Aufnahmen drehbar gelagert. Die linke Platte 15 und rechte Platte 16 sind mit einer Grundplatte 17 fest verbunden und bilden zusammen ein Gestell (Festland) für die in y-Richtung verschiebbaren Tragelemente 1a und 1b.

Die Tragelemente 1a und 1b sind über eine vordere Längsstrebe 13 und eine hintere Längsstrebe 14 verschiebbar (sowohl in y-Richtung als auch entgegen der y-Richtung) gelagert, wobei die Längsstreben 13, 14 einen homogenen, insbesondere runden Querschnitt aufweisen und selbst in entsprechenden Aufnahmen in den Platte 15 und 16 befestigt sind.

Das Tragelement 1b kann an der vorderen Längsstrebe 13 wie auch an der hinteren Längsstrebe 14 über rechtsseitige Klemmmittel 6b, beispielsweise eine Schraube mit Hebel oder Flügelschraube, und damit am Gestell (15, 16, 17) festgesetzt werden. Ebenso kann das Tragelement 1a an der vorderen Längsstrebe 13 wie auch an der hinteren Längsstrebe 14 über linksseitige Klemmmittel 6a, beispielsweise eine Schraube mit Hebel oder Flügelschraube, und damit am Gestell (15, 16, 17) festgesetzt werden.

Wie aus Fig. 2 ersichtlich befindet sich auf der Welle 4 eine Kupplungseinheit 3, vorzugsweise mittig, in Form einer Hülse durch die sich die Welle 4 erstreckt.

Die Kupplungseinheit 3 weist einen mittleren oder gar mittigen Klemmbereich 8 auf, dessen Innendurchmesser geringfügig größer als der Außendurchmesser der Welle 4 ausgebildet ist. Der Klemmbereich kann in seinem Innendurchmesser verkleinert oder vergrößert werden (beispielsweise durch Anziehen oder Lösen einer in der Zeichnung dargestellten Schraube), so dass die Kupplungseinheit 3 an einer gewünschten Position an der Welle 4 fixiert werden kann.

Neben dem mittleren Klemmbereich 8 weist die Kupplungseinheit 3 äußere Klemmbereiche 7a, 7b mit im Vergleich zum mittleren Klemmbereich 8 größerem Innendurchmesser auf um dort in gleicher Weise (Lösen und Anziehen einer jeweiligen Schraube) Gewindehülsen 2a und 2b lösbar zu fixieren.

Die linken und rechten Gewindehülsen 2a und 2b weisen einen im Vergleich zum Außendurchmesser der Welle 4 geringfügig größeren Innendurchmesser auf, so dass die Welle 4 in diesen Gewindehülsen 2a, 2b (spielfrei) drehbar und längsverschiebbar ist.

An ihrem Außenmantel weisen die Gewindehülsen 2a, 2b, zumindest in einem Teilbereich, ein Außengewinde, insbesondere Feingewinde auf, das in ein in den Tragelementen 1a, 1b vorgesehenes komplementäres Innengewinde einer Ausnehmung oder gar Durchführung eingreift.

Entsprechend kann das linke Tragelement 1a durch eine Drehung der Welle 4 mit daran festgeklemmter Kupplungseinheit 3 und darin festgeklemmter linke Gewindehülse 2a in seiner y-Position bewegt bzw. verschoben werden.

In gleicher Weise kann das rechte Tragelement 1b durch eine Drehung der Welle 4 mit daran festgeklemmter Kupplungseinheit 3 und darin festgeklemmter rechter Gewindehülse 2b in seiner y-Position bewegt bzw. verschoben werden.

Ist das jeweils andere Tragelement 1a, 1b hierbei auch festgeklemmt (mit der Kupplungseinheit 3 verbunden), so erfolgt deren Bewegung gemeinsam, insbesondere aufeinander zu oder voneinander weg (gegenläufig ausgeprägt Gewinde).

Ist das jeweils andere Tragelement 1a, 1b dagegen nicht festgeklemmt (mit der Kupplungseinheit 3 verbunden), so erfolgt nur eine Bewegung und damit Veränderung der Position des Tragelements 1a, 1b das mit der Kupplungseinheit 3 verbunden ist. Die Position des anderen (nicht mit der Kupplungseinheit 3 verbundenen) Tragelements bleibt dann unverändert. Um diese feste Position des nicht mit der Kupplungseinheit 3 verbundenen Tragelements zu sichern, kann das Tragelement 1a zusätzlich mittels eines (vorzugsweise zwei) Klemmmittels 6a an vorderer und/oder hinterer Längsstrebe 13, 14 festgesetzt werden. Ebenso kann das Tragelement 1b zusätzlich mittels eines (vorzugsweise zwei) Klemmmittels 6b an vorderer und/oder hinterer Längsstrebe 13, 14 festgesetzt werden.

Auf diese Weise kann die Position der Tragelemente 1a, 1b durch entsprechendes Lösen der Klemmbereiche 7a und 7b Kupplungseinheit 3 und entsprechende Betätigung der Welle 4 mittels Handrad 5 in der gewünschten Weise auf neue Anforderungen (insbesondere bei einem Produktwechsel) geändert werden.

Hierdurch wird eine unabhängige Einstellung von Abstand der Tragelemente zueinander, von linkem und rechtem Abstand zum Produkt und der Mittenposition ermöglicht.

Selbstverständlich ist statt einer manuellen Betätigung des Handrads 5 auch eine Stellvorrichtung mittels eines Aktuators, insbesondere Stellmotors denkbar, die vorzugsweise über eine Auswerte- und/oder Steuereinrichtung, insbesondere automatisch mittels detektierter oder vordefinierter Parameter (Abmessungen des Produkts, etc.), gesteuert wird.

Entsprechend ergeben sich die folgenden unterschiedlichen Verfahrmöglichkeiten:
Alle Klemmbereiche 7a, 7b und 8 zu:
Die Kupplungseinheit 3 verbleibt auf einer festen Position auf der Welle 4. Eine Drehung der Welle 4 bewegt beide Tragelemente 1a, 1b gleichmäßig auf die zentrale Kupplungseinheit 3 zu oder von ihr weg. Der Abstand der Tragelemente 2a, 2b zueinander wird verändert, aber die Mittenposition bleibt konstant.

Alle drei Klemmbereiche 7a, 7b und 8 offen:
Die Tragelemente 1a, 1b und die Kupplungseinheit 3 können manuell (oder automatisch) ohne Drehung der Welle 4 gemeinsam axial (entlang der y- Achse) verschoben werden. Der Abstand der Tragelemente 1a, 1b zueinander bleibt konstant (keine Kopplung der beiden Gewindehülsen 2a, 2b und Kupplungseinheit 3 mit der inneren Welle 4. Bei einer Drehung der Welle 4 erfolgt kein Einfluss auf die Tragelemente 1a, 1b.

Mindestens ein äußerer Klemmbereich 7a, 7b zu, mittlerer Klemmbereich offen: Mindestens eine Gewindehülse 2a, 2b ist drehfest mit der inneren Welle 4 verbunden.

Wenn ein Tragelemente 1a, 1b vorzugsweise durch das zusätzliche Klemmmittel (6a, 6b) am Gestell 15, 16, 17 festgesetzt wird, wird nur das andere Tragelement 1b, 1a bei Drehung der Welle 4 verschoben wohingegen das festgesetzte Tragelement 1a, 1b in seiner Position gesichert ist. Hierdurch wird eine separate Verstellung eines Tragelements 1a, 1b bei gesicherter Position des anderen Tragelements 1b, 1a ermöglicht.

Im Folgenden werden zur besseren Erläuterung der Erfindung die sich ergebenden Einstellmöglichkeiten ausgeführt:
(a) Zuerst (manuelle) Verschiebung der Tragelemente 1a, 1b z.B. auf eine gewünschte vorgegebene Mittenposition, danach Festsetzung der Kupplungseinheit 3 auf der Welle 4 und anschließend Einstellung eines vorgegebenen Abstands der Seitenführungen über ein Drehen der Welle 4.
(b) Zuerst (manuelle) Verschiebung der Tragelemente 1a, 1b (bis ein Tragelement 1a, 1b eine Sollposition erreicht, beispielsweise durch Schieben gegen einen provisorischen Anschlag in Form eines Stellrings 9). Danach Festsetzen des positionierten Tragelements 1a, 1b (durch zusätzliches Klemmmittel 6a, 6b am Gestell 15, 16, 17 und anschließend Einstellung eines vorgegebenen Abstands über Drehen der Welle 4.

Das Tragelement 1a, 1b wird an der vorderen und/oder hinteren Längsstrebe 13, 14 über die entsprechend vorhandenen, von außen betätigbaren (Hebel) Klemmmittel 6a, 6b festgesetzt. Zusätzlich wird der äußere Klemmbereich 7a, 7b der Kupplungseinheit 3 auf der entsprechend festgesetzten Seite (links, rechts) gelöst bzw. "entkuppelt", so dass die Drehmomentübertragung der durchgehenden Welle 4 zur Gewindehülse 2a, 2b) unterbrochen ist. Somit ist eine freie Auswahl, welches Tragelement 1a, 1b beim Betätigen der durchgehenden Welle 4 der Querverstellung (Handrad 5) verstellt wird (nur links / nur rechts oder zentrisch), möglich.

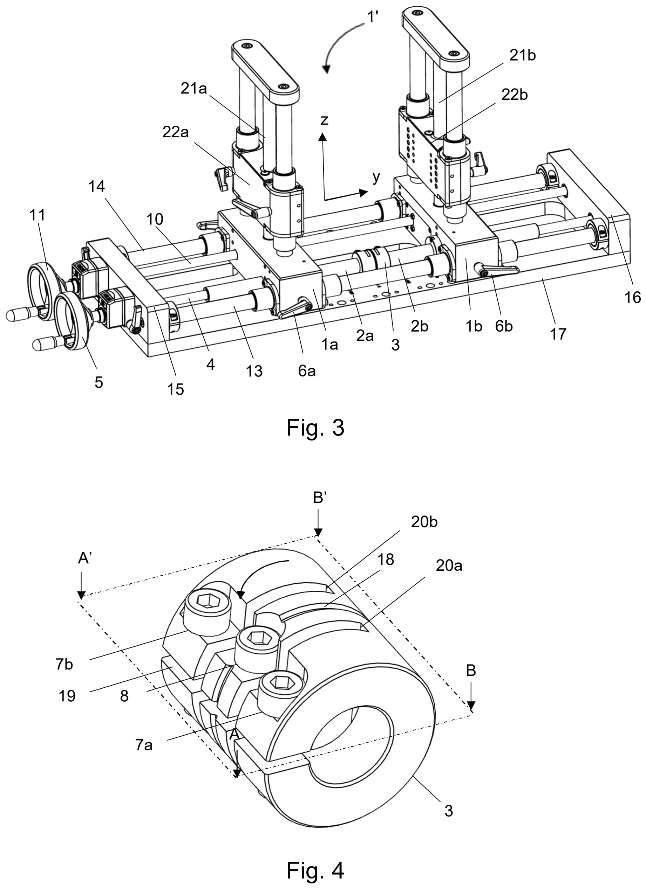

Die in Fig. 3 gezeigte zweite Ausführungsform einer Einstellvorrichtung 1' unterscheidet sich von der vorstehend erläuterten ersten Ausführungsform einer Einstellvorrichtung 1 durch das Vorsehen einer zweiten Welle 10, die über ein zweites Handrad 11 betätigt werden kann, um eine Höhenverstellung von Elementen 22a, 22b, die auf den Tragelementen 1a, 1b angeordnet sind, zu ermöglichen.

Alle übrigen Merkmale und damit Ausgestaltungen entsprechen damit der ersten Ausführungsform der Einstellvorrichtung 1.

Zur Drehmomentübertragung der zweiten Welle 10 kann auf dieser eine längsverschiebbar aber drehfest angeordnete Gewindehülse mit Außengewinde vorgesehen sein, die über eine entsprechend komplementäres Mittel, insbesondere Zahnrad, und Mechanik eine Höhenverstellung über eine Drehung der senkrechten Welle 21a, 21b des Elements 22a, 22b bewirkt.

Hierzu kann die Welle 21a, 21b ein Außengewinde aufweisen, das in ein hierzu komplementäres Innengewinde des Elements 22a, 22b eingreift, so dass bei Drehung der Welle 21a, 21b eine Verschiebung des Elements 22a, 22b in Höhenrichtung z erfolgt.

Selbstverständlich sind auch andere Ausgestaltungen für die Höhenverstellung der Elemente 22a, 22b denkbar, beispielsweise über auf den Wellen 21a, 21b lösbare und festsetzbar angeordnete Gewindehülsen, ähnlich der vorstehend erläuterten Technik zur Verstellung der Tragelemente 1a, 1b. Die Elemente 21a, 21b werden vorzugsweise gemeinsam in der Höhe verstellt, wobei auch ein Entkoppeln und separates Verstellen, wie vorstehend anhand der Verstellung der Tragelemente 1a, 1b beschrieben, denkbar ist.

Wie in Fig. 4 dargestellt, ist die Kupplungseinheit 3 als Hülse einstückig mit radialen Schlitzungen 20a und 20b ausgebildet. Hierdurch ist die Kupplungseinheit 3 in 3 Bereiche unterteilt, einem mittleren Klemmbereich 8 und zwei äußeren Klemmbereichen 7a und 7b. Um den Innendurchmesser der Klemmbereiche 7a, 7b und 8 mittels Anziehen oder Lösen einer Schraube zu verkleinern (Klemmen) oder zu vergrößern (Lösen) besitzt jeder Klemmbereich einen Schlitz, vorzugweise einen (durchgehenden bzw. fluchtenden) axialen Klemmschlitz 19.

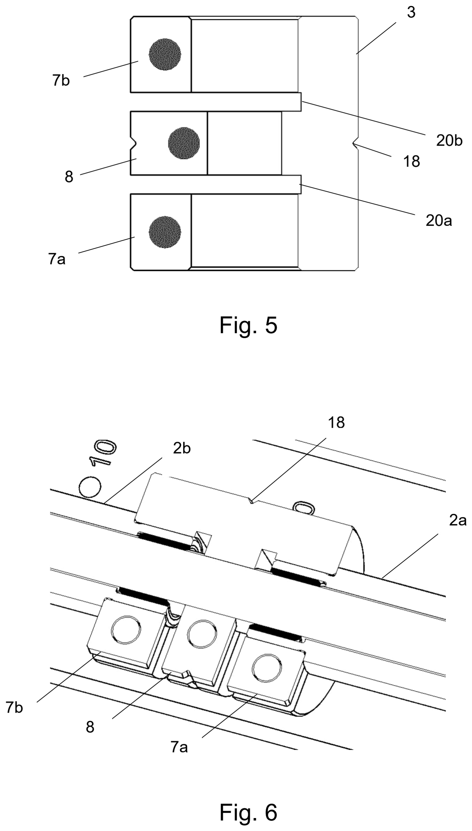

Wie aus Fig. 5 ersichtlich, weist der mittleren Klemmbereich 8 einen gegenüber den äußeren Klemmbereichen 7a und 7b geringeren Innendurchmesser auf, so dass (siehe Fig. 6) der innere Klemmbereich 8 auf der durchgehenden Welle 4 festgeklemmt werden kann und an bzw. in den äußeren Klemmbereichen die Gewindehülsen 2a und 2b festgeklemmt werden können. Die zugehörige mittlere Klemmschraube kann dementsprechend in radialer Richtung näher an die zentrale Achse der Welle 4 versetzt werden.

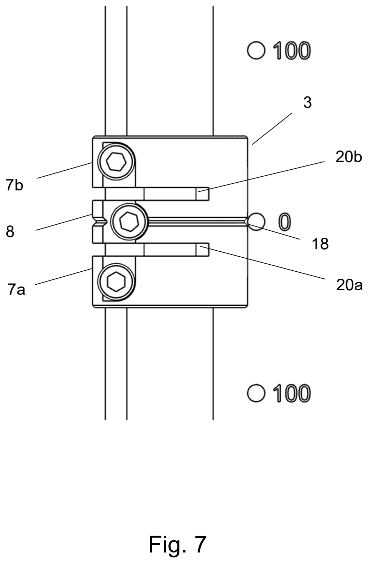

Weiterhin weist die Kupplungseinheit 3 eine umlaufende (radiale) Nut 18 auf. Diese Nut 18 dient als Positioniermittel, wie in Fig. 7 dargestellt, der exakten Positionierung, beispielsweise der "0"-Position, gegenüber einer am Gestell und damit am Festland befindlichen Skala ("0", "100").

Selbstverständlich sind statt einer Ausgestaltung des Einstellelements in Form einer Welle 4 (10) auch andere Ausgestaltungen wie beispielsweise als Linearantrieb (insbesondere Zahnstangenantrieb) möglich.

Die Kupplungseinheit 3 kann selbstverständlich auch in anderer Form realisiert werden. Beispielsweise in Form von mit dem Einstellelement 4 getrennt in Eingriff und außer Eingriff (durch eine Längsverschiebung) bringbare Kraftübertragungselemente, insbesondere auf einer anderen parallelen Welle angeordneten Zahn- oder Reibräder.

Durch die Erfindung ist es vorteilhafterweise möglich, im Wesentlichen spielfrei Positionen mit hoher Präzision aber trotzdem flexibel einzustellen.

Die Erfindungsgemäße Lösung ist zudem platz- und kostensparend.

### Bezugszeichenliste

- 1: Einstellvorrichtung (erste Ausführungsform)
- 1': Einstellvorrichtung (zweite Ausführungsform)
- 1a: linksseitige Tragelement
- 1b: rechtsseitige Tragelement
- 2a: linke Gewindehülsen mit unterschiedlichen Gangrichtungen (eine linksdrehend, andere rechtsdrehend)
- 2b: rechte Gewindehülsen
- 3: Kupplungseinheit
- 4: gewindelose (erste) Welle (Einstellelement)
- 5: Handrad für Welle 4
- 6a: linksseitiges Klemmmittel um Tragelemente 1a am Gestell festzusetzten
- 6b: rechtsseitiges Klemmmittel um Tragelemente 1b am Gestell festzusetzten
- 7a: linker äußerer Klemmbereich
- 7b: rechter äußerer Klemmbereich
- 8: mittlerer Klemmbereich
- 9: Stellring (vorpositionierter)
- 10: zweite Welle
- 11: Handrad für Welle 10
- 12: Förderband
- 13: vordere Längsstrebe (in Fig. 2 weggelassen)
- 14: hintere Längsstrebe (Gestell aus 15, 16, 17)
- 15: linke Platte
- 16: rechte Platte
- 17: Grundplatte
- 18: umlaufende Nut
- 19: axialer Klemmschlitz
- 20a: radiale Schlitzungen
- 20b: radiale Schlitzungen
- 21a: senkrechte Welle des Tragelements 1a
- 21b: senkrechte Wellle des Tragelements 1b
- 22a: Element an Tragelements 1a
- 22b: Element an Tragelements 1b

- x: Förderrichtung
- y: Querrichtung
- z: Höhenrichtung
- x-y: Förderebene

## Patentansprüche

1. Einstellvorrichtung für eine Fördervorrichtung mit einer Transportstrecke zum Fördern von Objekten in einer Förderrichtung (x),
wobei die Einstellvorrichtung seitlich der Transportstrecke wenigstens zwei einander gegenüberliegende links- und rechtsseitige Tragelemente (1a, 1b) aufweist,
die Tragelemente (1a, 1b) über die gemeinsame Einstellvorrichtung jeweils in oder entgegen einer Richtung (y) quer zur Förderrichtung (x) verstellbar sind,
**dadurch gekennzeichnet, dass**
die Einstellvorrichtung ein Einstellelement und eine Kupplungseinheit (3) aufweist, die ein voneinander unabhängiges Trennen und Verbinden sowohl der linksseitigen als auch der rechtsseitigen Tragelemente (1a, 1b) von dem Einstellelement ermöglicht.

2. Vorrichtung nach Anspruch 1, **dadurch gekennzeichnet, dass** die Kupplungseinheit (3) für das Lösen und Verbinden der links und rechtsseitigen Tragelemente (1a, 1b) mit dem Einstellelement getrennt in Eingriff und außer Eingriff bringbare Kraftübertragungselemente aufweist.

3. Vorrichtung nach Anspruch 1 oder 2, **dadurch gekennzeichnet, dass** das Einstellelement derart drehbar und/oder verschiebbar ausgebildet ist, dass die Tragelemente (1a, 1b) durch Betätigung des Einstellelements abhängig von dem Kupplungszustand einzeln oder gemeinsam zentrisch aufeinander zu oder voneinander weg oder gemeinsam äquidistant verstellt werden können, wobei die Tragelemente (1a, 1b) mittels der Kupplungseinheit (3) mit dem Einstellelement zu einem jeweiligen Kupplungszustand einzeln lösbar verbindbar sind.

4. Vorrichtung nach einem der vorhergehenden Ansprüche, **dadurch gekennzeichnet, dass** die Kupplungseinheit (3) mindestens zwei Klemmbereiche (7a, 7b) aufweist, um die die Tragelemente (1a, 1b) unabhängig voneinander mit der Kupplungseinheit (3) lösbar zu verbinden.

5. Vorrichtung nach einem der vorhergehenden Ansprüche, **dadurch gekennzeichnet, dass** die Kupplungseinheit (3) derart ausgebildet ist, dass sie relativ zum Einstellelement verschoben und/oder verdreht werden kann.

6. Vorrichtung nach einem der vorhergehenden Ansprüche, **dadurch gekennzeichnet, dass** die Kupplungseinheit (3) mindestens 3 Klemmbereiche (7a, 8, 7b) aufweist, wobei ein Klemmbereich (8) dazu dient die Kupplungseinheit (3) mit dem Einstellelement lösbar zu verbinden.

7. Vorrichtung nach Anspruch 6, **dadurch gekennzeichnet, dass** die mindestens 3 Klemmbereiche (7a, 8, 7b) jeweils einen eigenen axialen Klemmschlitz (19), bevorzugt in einer Linie, und eigene Klemmmittel aufweisen.

8. Vorrichtung nach Anspruch 6 oder 7, **dadurch gekennzeichnet, dass** die mindestens drei Klemmbereiche (7a, 8, 7b) in axialer Richtung durch mindestens zwei radiale Schlitzungen (20a, 20b) getrennt sind.

9. Vorrichtung nach einem der Ansprüche 5 bis 8, **dadurch gekennzeichnet, dass** die Kupplungseinheit (3) eine Markierung, insbesondere eine umlaufende Nut (18), aufweist, um eine optische Justage zu erleichtern.

10. Vorrichtung nach einem der vorhergehenden Ansprüche, **dadurch gekennzeichnet, dass** das Einstellelement als drehbare Welle (4) oder als Linearantrieb ausgebildet ist.

11. Vorrichtung nach Anspruch10, **dadurch gekennzeichnet, dass** die Tragelemente (1a, 1b) drehbare Gewindehülsen (2a, 2b) oder Gewindestangen aufweisen, wobei die Gewindehülsen (2a, 2b) oder Gewindestangen durch die Kupplungseinheit (3) mit der drehbaren Welle (4) als Einstellelement einzeln verbindbar und lösbar sind, so dass durch Drehung der drehbaren Welle (4) im verbundenen Zustand die Tragelemente (1a, 1b) einzeln oder gemeinsam verschoben werden können.

12. Vorrichtung nach Anspruch 11, **dadurch gekennzeichnet, dass** die Kupplungseinheit (3) selbst mit der drehbaren Welle (4) verbindbar und lösbar ausgebildet ist.

13. Vorrichtung nach einem der vorhergehenden Ansprüche, **dadurch gekennzeichnet, dass** die Tragelemente (1a, 1b) unabhängig voneinander an einem Gestell (15, 16, 17) der Vorrichtung festsetzbar ausgebildet sind.

14. Vorrichtung nach einem der vorhergehenden Ansprüche, **dadurch gekennzeichnet, dass** die Tragelemente (1a, 1b) und/oder Teile der Tragelemente in einer Höhenrichtung (z) verschiebbar ausgebildet sind.
